Europäisches Patentamt

European Patent Office

Office européen des brevets

(11) Veröffentlichungsnummer: **0 204 235**
**B1**

(12) **EUROPÄISCHE PATENTSCHRIFT**

(45) Veröffentlichungstag der Patentschrift:
03.01.90

(21) Anmeldenummer: 86107079.5

(22) Anmeldetag: 24.05.86

(51) Int. Cl.⁵: $F\ 16\ C\ 27/06$, $F\ 04\ D\ 29/04$

(54) Keramikgleitlager für Pumpenwellenlager.

(30) Priorität: 07.06.85 DE 3520560

(43) Veröffentlichungstag der Anmeldung:
10.12.86 Patentblatt 86/50

(45) Bekanntmachung des Hinweises auf die Patenterteilung: 03.01.90 Patentblatt 90/01

(84) Benannte Vertragsstaaten:
AT BE CH DE FR GB IT LI LU NL SE

(56) Entgegenhaltungen:
DE-A- 2 358 225
DE-B- 1 528 640
DE-C- 908 812
FR-A- 1 553 283
FR-A- 2 378 985
GB-A- 1 157 879
US-A- 2 674 505
US-A- 3 679 279

(73) Patentinhaber: KSB Aktiengesellschaft
Johann-Klein-Strasse 9
D-6710 Frankenthal (DE)

(72) Erfinder: Schulze,Hermann
Hohe Berg 10
D-2860 Osterholz-Scharmbeck 5 (DE)

## Beschreibung

Die Erfindung betrifft ein Gleitlager gemäß dem Oberbegriff des Hauptanspruches.

Aus der DE-C-29 23 075 und der DE-B-15 28 640 sind für Kreiselpumpen oxydkeramische Wellenlagerungen bekannt, bei denen die Lager unter Zwischenschaltung eines 0-Ringes elastisch im Gehäuse befestigt sind. Nachteilig ist bei dieser Lösung, daß keine ausreichende Verdrehsicherung gewährleistet ist. Somit kann infolge von Ablagerungen zwischen dem stillstehenden und dem rotierenden Teil eine Blockierung erfolgen, welche eine Zerstörung des elastischen Elementes zur Folge hätte.

Durch die DE-A-23 58 225 ist eine Kunststofflagerbuchse bekannt, die mit einem Elastomer-Körper für einen elastischen Einbau überzogen ist. Zwecks Verdrehsicherung weist die Kunststofflagerbuchse sich über die gesamte Baulänge erstreckende, sich kreuzende oder umlaufende geschlossene Nuten auf, mit deren Hilfe eine Verdrehsicherung zwischen den gefügten Teilen bewirkt werden soll. Die dadurch bedingte Schwächung des Lagerquerschnittes schränkt jedoch den Verwendungsbereich dieser Lösung erheblich ein.

Der Erfindung liegt die Aufgabe zugrunde, für keramische Lagerteile eine stoßdämpfende und ausgleichende Lagerung zu entwickeln, welche eine zerstörungsfreie Fixierung der Lagerteile gewährleistet. Die Lösung dieser Aufgabe erfolgt gemäß dem kennzeichnenden Teil des Hauptanspruches. Mittels derartiger Nuten, die nicht miteinander verbunden sind, wird eine Lagesicherung sowohl in axialer als auch in radialer Richtung erlangt. Der gerundete Querschnitt der Nuten sowie der dementsprechende Nutenauslauf verhindert die Entstehung von das Lagerteil gefährdenden Spannungen. Dadurch, daß die Nutenden nicht mehr an den Lagerstirnseiten auslaufen, kann in wirkungsvoller Weise eine Zerstörung des Lagers vermieden werden. Ein Brechen des Lagerteiles im Nutbereich, verursacht durch übermäßige Lagerbelastungen, beispielsweise infolge von Wellendurchbiegungen, Stößen oder Schiefstellungen, wird damit zuverlässig verhindert.

Eine Ausgestaltung der Erfindung sieht vor, daß zwischen Gummielement und Lager ein Klebstoff angebracht ist. Mittels dieser Maßnahme kann eine zusätzliche Lagesicherung des Lagers innerhalb des schlauchförmigen Gummielementes erlangt werden. Und zum anderen stellt es bei Verwendung von dem Lager vor- oder nachgeschalteten Dichtungen eine zusätzliche Dichtungsmaßnahme dar.

Eine weitere Ausgestaltung der Erfindung sieht vor, daß das Gummielement mit Klebstoff im Gehäuse befestigt ist. Somit kann in einfachster Weise eine Montage vorgenommen werden, die für das Lager keine gefährdende Belastung vorsieht, sondern ausschließlich auf das elastische Gummielement einwirkt. Ein Ausführungsbeispiel der Erfindung ist in den Zeichnungen dargestellt und wird im folgenden näher beschrieben. Es zeigen die

Fig. 1 eine perspektivische Ansicht und die
Fig. 2 einen Querschnitt durch eine montierte Lager Verbindung.

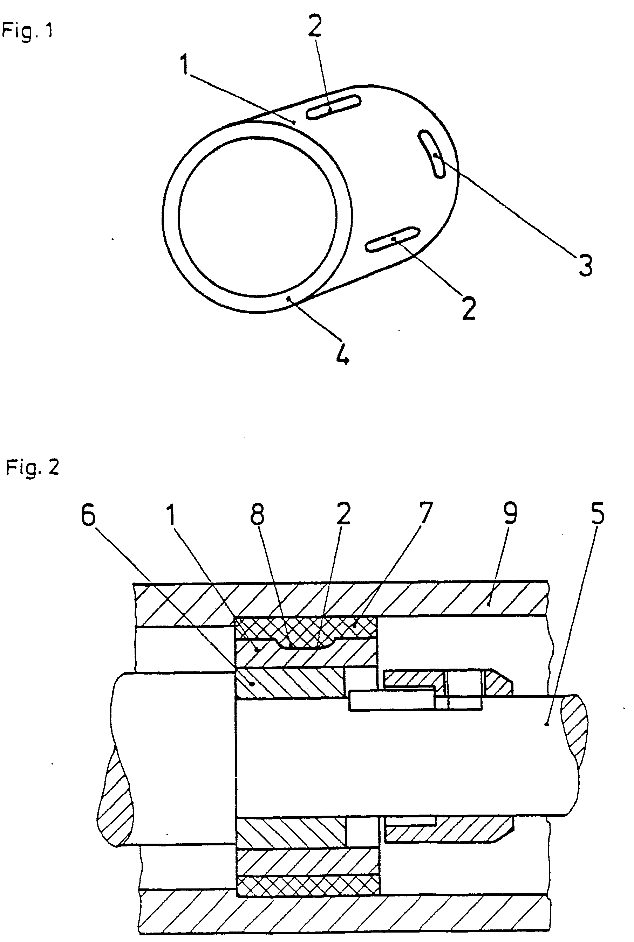

Die Fig. 1 zeigt in perspektivischer Ansicht ein Lager (1) aus Siliciumcarbid, das an seiner Außenfläche mit einen gerundeten Querschnitt aufweisenden Nuten (2, 3) versehen ist. Dadurch wird in zuverlässiger Weise ein Brechen des Lagers (1) verhindert. Zudem sind die Nuten (2, 3) im Abstand zu den Lagerstirnseiten (4) angebracht, wodurch eine mögliche Bruchgefahr weiter vermindert wird. Sie können in radialer und/oder axialer Richtung verlaufen.

Die Fig. 2 zeigt eine montierte Lagerung. Auf einer Welle (5) ist eine damit rotierende Lagerbuchse (6) angebracht, die innerhalb eines aus dem gleichen Werkstoff bestehenden Lagers (1) läuft. Das Lager (1) ist auf einer Außenseite mit einem schlauchförmigen Gummielement (7) überzogen, dessen auf der Innenseite angebrachten Vorsprünge (8) in die Nuten (2) des Lagers (1) verdrehsichernd einrasten. Das Gummielement (7) wird hier innerhalb eines Gehäuses (9) mit einem Klebstoff, z. B. Volcoferran von HAW, Borum, in seiner Position gehalten. Der Klebstoff verbindet das Gummielement (7) zuverlässig mit dem metallischen Gehäuse (9) und ist öl-, laugen- und säurebeständig, damit die Verbindung beim Einsatz in allen Arten von Wasser zuverlässig bestehen bleibt.

## Patentansprüche

1. Gleitlager aus keramischem Werkstoff zur Lagerung von Pumpenwellen, wobei eine mit der Welle (5) rotierende Lagerbuchse (6) innerhalb eines aus demselben Material bestehenden Lagers (1) läuft und das Lager innerhalb eines Gehäuses (9) elastisch befestigt ist und insbesondere Siliciumcarbid als Lagerwerkstoff Verwendung findet, dadurch gekennzeichnet, daß das Lager (1) an seinem Außenumfang mit ein oder mehreren, einen gerundeten Querschnitt aufweisenden einzelnen, nicht mit einander verbundenen Nuten (2, 3) versehen ist, daß die einzelnen Nuten im Abstand zur Lagerstirnseite (4) verlaufen und/oder enden, daß das Lager (1) außen mit einem schlauchförmigen Gummielement (7) überzogen ist und daß auf dessen Innenseite angebrachte Vorsprünge (8) lagesichernd in die einzelnen Nuten (2, 3) des Lagers einrasten.

2. Gleitlager nach Anspruch 1, dadurch gekennzeichnet, daß zwischen Gummielement (7) und Lager (1) ein Klebstoff angebracht ist.

3. Gleitlager nach den Ansprüchen 1 und 2, dadurch gekennzeichnet, daß das Gummielement (7) mit Klebstoff im Gehäuse (9) befestigt ist.

## Claims

1. A plain bearing of ceramic material for use with pump shafts, in the case of which a bearing bushing (6) rotating with the shaft (5) runs within a bearing (1) made of the same material and the bearing is secured within a housing (9) elastically and more especially silicon carbide is used as the bearing material, characterized in that at its outer periphery the bearing (1) is provided with one or more individual grooves (2 and 3) which are not connected together and have a round cross section, in that the individual grooves extend and/or end at a distance from the end face (4) of the bearing, in that the bearing (1) is externally covered with a hose-like rubber element (7) and in that projections (8) arranged on the inner side of the same snap into the individual grooves (2 and 3) to keep it in place.

2 The plain bearing as claimed in claim 1, characterized in that an adhesive is arranged between the rubber element (7) and the bearing (1).

3. The plain bearing as claimed in claims 1 and 2, characterized in that the rubber element (7) is secured with adhesive in the housing (9).

## Revendications

1. Palier de glissement en matière céramique pour le logement d'arbres de pompes, dans lequel un coussinet (6) qui tourne avec l'arbre tourne à l'intérieur d'un palier (1) fabriqué dans le même matériau, dans lequel le palier est fixé élastiquement dans un boîtier (9) et dans lequel le matériau utilisé pour le palier est en particulier du carbure de silicium, caractérisé en ce que le palier (1) présente sur sa circonférence externe une ou plusieurs rainures (2, 3) individuelles, non reliées entre elles, de section arrondie et en ce que les rainures sont orientées à distance de la face frontale (4) du palier ou y aboutissent, en ce que le palier (1) est recouvert à l'extérieur d'un élément en caoutchouc (7) tubulaire et en ce que sur la face interne de ce dernier des épaulements (8) y sont placés pour le maintien en position dans les diverses rainures (2, 3) du palier.

2. Palier de glissement selon la revendication 1 caractérisé en ce qu'une colle est apposée entre l'élément en caoutchouc (7) et le palier (1).

3. Palier de glissement selon les revendications 1 et 2 caractérisé en ce que l'élément en caoutchouc (7) est fixé dans le boîtier (9) par de la colle.

Fig. 1

Fig. 2